Europäisches Patentamt

European Patent Office

Office européen des brevets

(19)

(11) Numéro de publication: **0 292 339**
**B1**

(12) **FASCICULE DE BREVET EUROPEEN**

(45) Date de publication du fascicule du brevet: **16.01.91**

(21) Numéro de dépôt: **88400511.7**

(22) Date de dépôt: **04.03.88**

(51) Int. Cl.⁵: **G 01 C 21/16**

(54) **Centrale d'attitude integrée pour aérodyne.**

(30) Priorité: **28.04.87 FR 8705985**

(43) Date de publication de la demande:
**23.11.88 Bulletin 88/47**

(45) Mention de la délivrance du brevet:
**16.01.91 Bulletin 91/03**

(84) Etats contractants désignés:
**DE GB IT**

(56) Documents cités:
**US-A-4 095 271**

**JOURNAL OF GUIDANCE, CONTROL &
DYNAMICS, vol. 5, no. 3, mai-juin 1982, pages
236-242, New York, US; I.Y. BAR-ITZHACK et al.:
"Doppler-aided low-accuracy strapdown inertial
navigation system"**

**JOURNAL OF GUIDANCE & CONTROL, vol. 2,
no. 4, juillet-août 1979, pages 320-327, New
York, US; C. SAN GIOVANNI Jr.: "Performance
of a ring laser strapdown attitude and heading
reference for aircraft"**

(73) Titulaire: **SEXTANT AVIONIQUE S.A.
Immeuble le Galilée Parc Tertiaire de Meudon
5/7 rue Jeanne Braconnier
F-92366 Meudon la Forêt Cédex (FR)**

(72) Inventeur: **Pierson, Benoît
57, avenue de Sufren
F-75007 Paris (FR)**
Inventeur: **Osnowycz, Wladimir
10, Villa Louis Grossin
F-92140 Clamart (FR)**

(74) Mandataire: **Marquer, Francis et al
Cabinet Moutard 35, Avenue Victor Hugo
F-78960 Voisins le Bretonneux (FR)**

(56) Documents cités:

**JOURNAL OF GUIDANCE & CONTROL, vol. 1,
no. 3, mai-juin 1978, pages 161-172, New York,
US; S.C. GARG et al.: "Strapdown navigation
technology: a literature survey"**

Courier Press, Leamington Spa, England.

## Description

La présente invention concerne une centrale d'attitude intégrée pour aérodyne, c'est-à-dire un dispositif apte à détecter l'orientation de l'aérodyne, notamment l'angle de gîte φ, l'assiette longitudinale θ et le cap, par rapport à un système de coordonnées tel que le trièdre géographique local.

L'invention a plus particulièrement pour but d'obtenir ce résultat à l'aide d'un dispositif permettant d'utiliser notamment, mais non exclusivement, les informations délivrées par des dispositifs de détection accélérométriques, gyrométriques et magnétométriques dont les axes sont liés à l'aérodyne.

D'une manière générale, on sait que pour la détermination de l'attitude d'un aérodyne, on utilise fréquemment des ensembles de mesure utilisant, pour chacun des angles d'attitude, des capteurs non liés à la structure de l'aérodyne tels que des gyroscopes balourdés alignés sur la verticale, pour la mesure de l'assiette, ou des cellules de flux couplées à des gyroscopes, pour la détermination du cap magnétique. Il s'avère que l'inconvénient de ces ensembles de mesure réside principalement dans la parcellisation des mesures et des circuits qu'elles font intervenir. En outre, certains capteurs utilisés en vue de cette détermination sont relativement délicats à réaliser et ne présentent pas toujours une bonne stabilité.

Par ailleurs, cette détermination de l'attitude peut être également effectuée à partir des informations émanant des capteurs utilisés par une centrale inertielle de navigation.

Toutefois, cette deuxième solution qui ne s'adresse qu'aux aérodynes équipés de centrales inertielles de navigation est trop coûteuse pour ceux qui en sont dépourvus.

L'invention a plus particulièrement pour but la réalisation d'une centrale d'attitude:
— qui permette d'éviter les inconvénients de la parcellisation, grâce à une intégration et une meilleure exploitation des sources d'information,
— qui soit beaucoup moins coûteuse qu'une centrale inertielle de navigation, et
— qui n'exige pas de capteurs spéciaux, délicats à réaliser, ni de réglages difficiles à exécuter.

Pour parvenir à ces résultats, l'invention propose une centrale d'attitude faisant plus particulièrement intervenir:
— un ensemble de détection accélérométrique apte à fournir les composantes accélérométriques de l'aérodyne selon un trièdre lié à l'aérodyne,
— un ensemble de détection gyrométrique apte à mesurer les composantes du vecteur rotation instantanée de l'aérodyne exprimées dans un trièdre lié à l'aérodyne,
— un ensemble magnétométrique apte à détecter les composantes du champ magnétique terrestre dans un trièdre équipollent aux susdits trièdres; cet ensemble pouvant en outre comprendre des moyens pour la compensation des informations délivrées par le capteur magnétométrique des perturbations magnétiques dues au porteur (aérodyne),
— des moyens de calcul aptes à él'aborer une matrice permettant d'effectuer la projection des composantes déterminées par rapport au trièdre lié à l'aérodyne, dans le trièdre géographique local,
— des moyens d'extraction de l'angle de gîte, de l'assiette longitudinale, et du cap, à partir de la susdite matrice,
— des moyens de détermination de la vitesse air de l'aérodyne,
— des moyens permettant de calculer, à partir de la susdite vitesse, les composantes de l'accélération dans le susdit premier trièdre,
— des moyens permettant de déterminer les composantes de l'accélération de la pesanteur dans le susdit premier trièdre en retranchant aux composantes de l'accélération déterminées par le susdit ensemble accélérométrique des composantes calculées à partir de la vitesse air,
— des moyens permettant de projeter lesdites composantes de l'accélération de la pesanteur dans le trièdre géographique local de manière à faire apparaître, dans le plan horizontal, des erreurs d'accélération attribuables à des erreurs d'attitude,
— des moyens permettant de projeter ces composantes dans le trièdre long-travers, c'est-à-dire un trièdre dont l'origine est un point de référence de l'aérodyne et constitué par un axe vertical et, situés dans un plan horizontal, par un défini comme étant la projection dans le plan horizontal de l'axe longitudinal de l'aérodyne, et par un axe perpendiculaire aux deux axes ainsi définis de l'aérodyne,
— des moyens permettant de déterminer les composantes horizontales des erreurs d'attitude à partir des composantes horizontales des erreurs d'accélération déterminées dans le trièdre long-travers,
— des moyens permettant de projeter les composantes du champ magnétique terrestre déterminées par le susdit ensemble magnétométrique dans le trièdre géographique local, à l'aide de la susdite matrice,
— des moyens permettant d'extraire, à partir des composantes de ces projections, de certains termes de la susdite matrice, et des composantes horizontales des erreurs d'attitude précédemment déterminées, l'erreur de cap dans le trièdre long-travers,
— des moyens pour élaborer les corrections des mesures gyrométriques dans le susdit trièdre lié à l'aérodyne, notamment à partir des erreurs d'assiette et de cap précédemment déterminées ainsi que de valeurs correctives tenant compte de la rotation terrestre.

Un mode d'exécution de l'invention sera décrit ci-après, à titre d'exemple non limitatif, avec référence aux dessins annexés dans lesquels:

La figure 1 représente schématiquement un aérodyne et la position angulaire du trièdre lié à cet aérodyne (trièdre aérodyne), par rapport au trièdre géographique local; et

La figure 2 est un schéma théorique d'un dispositif selon l'invention.

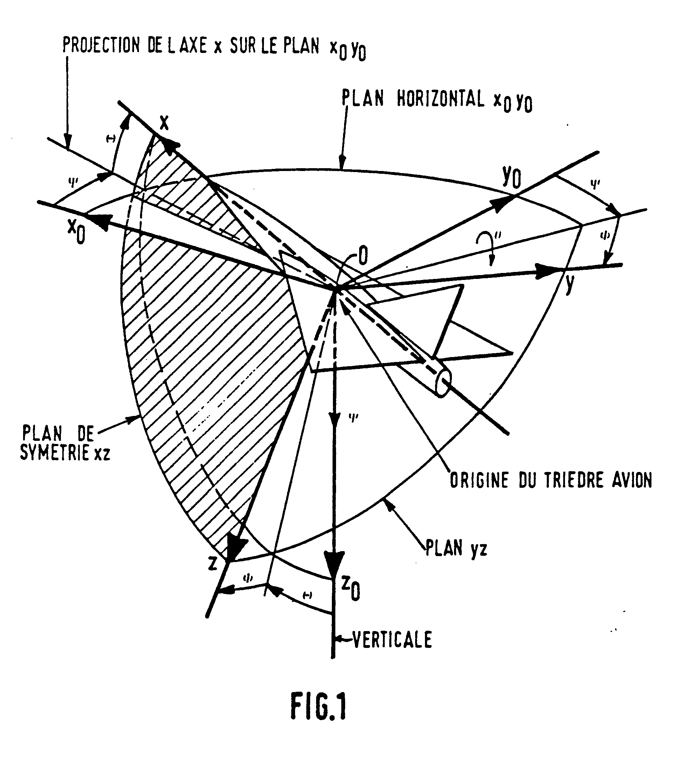

Dans l'exemple représenté sur la figure 1, le centre de gravité 0 de l'aérodyne sert d'origine à la fois pour le trièdre lié à l'aérodyne ou "trièdre aérodyne" et pour le trièdre géographique local.

Le "trièdre aérodyne" fait plus particulièrement intervenir un premier axe OX qui s'étend selon l'axe longitudinal de l'aérodyne, un second axe OY, qui s'étend perpendiculairement à l'axe OX dans le plan des ailes de l'aérodyne et un troisième axe OZ perpendiculaire au plan défini par les axes OX et OY.

Le trièdre géographique local comprend, quant à lui, un premier axe OZo, qui s'étend selon la verticale du point O et, dans un plan perpendiculaire à cet axe OZo, un axe OXo orienté selon le Nord géographique et un axe OYo orienté à l'Est.

Ces deux trièdres permettent de faire apparaître:
— l'azimut $\psi$ qui consiste en l'angle de rotation autour de l'axe OZo, pour amener l'axe OXo en coïncidence avec la projection OXl de l'axe longitudinal OX dans le plan horizontal OXo, OYo,
— l'assiette longitudinale $\theta$ qui est une rotation dans le plan vertical, faisant suite à la rotation $\psi$ qui amène l'axe OXl en coïncidence avec l'axe longitudinal OX,
— l'angle de gîte $\phi$ qui consiste en la rotation autour de l'axe longitudinal OX qui amène l'axe déplacé OYl, dans sa position finale OY, à partir de sa position atteinte après la rotation $\psi$.

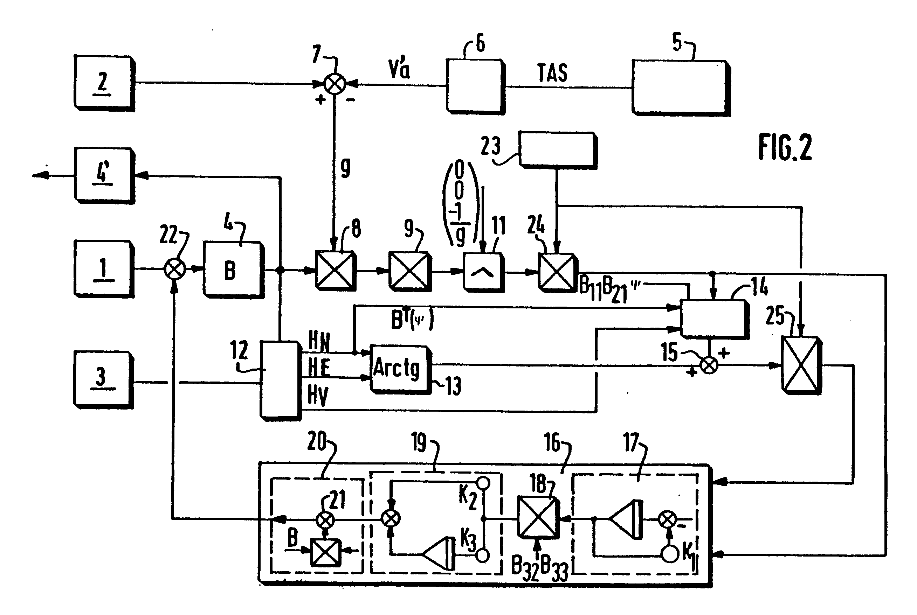

Ces définitions permettront de mieux comprendre le principe de la centrale d'attitude représentée sur la figure 2 qui, comme précédemment mentionné, fait intervenir trois ensembles de détection, axés selon la trièdre aérodyne, à savoir:
— un ensemble de détection gyrométrique 1 comprenant trois gyromètres respectivement alignés selon les trois axes du trièdre aérodyne,
— un ensemble de détection accélérométrique 2 comportant trois accéléromètres orientés selon les axes aérodyne, et
— un ensemble magnétométrique 3 dont les trois axes sensibles sont également orientés selon les axes aérodyne.

Dans cet exemple, la matrice B permettant de faire la projection dans le trièdre géographique local de composantes connues dans le trièdre aérodyne est une matrice de projection de la forme:

$$\begin{pmatrix} \cos\theta\cos\psi & - & - \\ \cos\theta\sin\psi & - & - \\ -\sin\theta & \cos\theta\sin\phi & \cos\theta\cos\phi \end{pmatrix}$$

A partir de cette matrice et plus particulièrement de la première colonne et de la troisième ligne, les angles $\psi$, $\theta$ et $\phi$ sont extraits par un bloc d'extraction 4' réalisant les calculs appropriés mettant en oeuvre par exemple la fonction Arctg.

Les capteurs utilisés dans l'ensemble de détection gyrométrique 1 sont des capteurs inertiels à sortie incrémentale délivrant des incréments angulaires. Ces incréments sont corrigés (bloc 22) à l'aide de corrections dont l'élaboration sera décrite plus loin.

Le calcul de la matrice de projection B (bloc 4) est effectué à partir de ces incréments corrigés. Il peut être réalisé de différentes manières.

La méthode décrite dans ce qui suit est donnée à titre d'exemple. Elle utilise un quaternion pour représenter les rotations. La valeur à l'instant n du quaternion, notée Qn, est déduite de la valeur à l'instant n − 1, notée Qn − 1, et des incréments gyrométriques corrigés disponibles à l'instant n, notés $d\theta x$, $d\theta y$ et $d\theta z$, grâce à la formule de mise à jour suivante:

$$Qn = Qn - 1 + \tfrac{1}{2} g\,(d\theta)\,Qn - 1$$

formule dans laquelle G $(d\theta)$ est une matrice 4×4 de la forme:

$$\begin{pmatrix} 0 & -d\theta x & -d\theta y & -d\theta z \\ d\theta x & 0 & d\theta z & -d\theta y \\ d\theta y & -d\theta z & 0 & d\theta x \\ d\theta z & d\theta y & -d\theta x & 0 \end{pmatrix}$$

et Qn et Qn − 1 des matrices 4×1 (vecteurs) représentant les valeurs du quaternion aux instants n et n − 1.

Le quaternion obtenu est ensuite normalisé de façon à satisfaire la relation $\Sigma qi^2 = 1$ dans laquelle qi représente la composante i du quaternion. La normalisation du quaternion peut être réalisée de la manière suivante, en deux étapes:

1) calcul de l'erreur de norme

$$E = -1 + \Sigma qi^2$$

EP 0 292 339 B1

où qi est l'une des quatre composantes du quaternion Qn, et E est un scalaire représentant l'erreur de norme;

2) correction de la norme du quaternion

$$Qn+ = Qn - \tfrac{1}{2} \cdot E \cdot Qn$$

où Qn+ désigne le quaternion corrigé (normalisé).

Les éléments de la matrice de projection B sont alors déterminés à partir des composantes du quaternion normalisé à l'aide de la relation:

$$B = \begin{pmatrix} q0^2+q1^2-q2^2-q3^2 & 2(q1q2-q0q3) & 2(q1q3+q0q2) \\ 2(q1q2+q0q3) & q0^2+q2^2-q1^2-q3^2 & 2(q2q3-q0q1) \\ 2(q1q3-q0q2) & 2(q2q3+q0q1) & q0^2+q3^2-q1^2-q2^2 \end{pmatrix}$$

où q0, q1, q2 et q3 sont les quatre composantes du quaternion Qn+.

Comme précédemment mentionné, la matrice B sert à effectuer la projection, dans le trièdre géographique local, des composantes de l'accélération de la pesanteur déterminées à partir des accéléromètres 2, et des composantes du champ magnétique terrestre déterminées par le magnétomètre 3.

Dans cet exemple, les composantes de l'accélération de la pesanteur dans le trièdre géographique local sont obtenues en retranchment aux composantes d'accélération mesurées par les accéléromètres 2, les composantes d'accélération V'a déterminées à partir de la vitesse air (notée TAS) calculée par une centrale anémométrique 5.

A cet effet, le calcul des composantes de l'accélération selon les axes x, y, z s'effectue dans le bloc 6 par dérivation de la vitesse air conformément à la relation suivante:

$$V'a = \begin{pmatrix} TASn - TASn - 1 \\ TAS + d\theta z \\ -TAS + d\theta y \end{pmatrix}$$

où TASn et TASn − 1 représentent les valeurs de la vitesse air aux instants n et n − 1.

Les composantes de cette accélération sont ensuite transmises à un soustracteur 7 qui reçoit sur son autre entrée les composantes d'accélération mesurées par rapport au trièdre lié à l'aérodyne par les accéléromètres de l'ensemble accélérométrique 2.

En conséquence, le soustracteur 7 délivre à sa sortie les composantes de l'accélération de la pesanteur g selon le trièdre lié à l'aérodyne.

Ces composantes sont ensuite projetées dans le trièdre géographique local (bloc 8) puis dans le trièdre long-travers (bloc 9), ces deux projections étant en fait obtenues par le double produit matriciel:

$$B^T (\psi) \cdot B$$

où la matrice notée $B^T (\psi)$ est construite à partir des éléments de la matrice B selon la formule:

$$B^T (\Psi) = \begin{pmatrix} B11 + B21 & 0 \\ -B21 & B11 & 0 \\ 0 & 0 & 1 \end{pmatrix}$$

Les composantes horizontales de l'erreur d'assiette exprimées dans le trièdre long-travers sont ensuite obtenues (bloc 11) en effectuant le produit vectoriel de l'accélération de la pesanteur déterminée par rapport au trièdre long-travers avec le vecteur:

$$\begin{pmatrix} 0 \\ 0 \\ -1/g \end{pmatrix}$$

où g est une constante représentant la pesanteur (9,81 m/s$^2$).

Les composantes du champ magnétique terrestre qui sont délivrées de façon continue par le magnétomètre 3 en référence au trièdre lié à l'aérodyne sont projetées dans le trièdre géographique local dans le bloc 12, à l'aide de la matrice B.

Une estimation de l'erreur de cap est ensuite effectuée par la fonction Arctg (bloc 13) des composantes horizontales HN et HE précédemment obtenues.

4

Compte-tenu du fait que le champ magnétique terrestre n'est pas horizontal, l'erreur de cap précédemment estimée, lorsque la matrice B contient une erreur d'assiette, est elle-même entachée d'une erreur qu'il convient donc de corriger.

Cette correction implique tout d'abord la reconstitution (bloc 14) de la composante Nord de l'erreur d'attitude $\delta\phi N$ en multipliant les composantes horizontales de l'erreur d'attitude dans le trièdre long-travers, par le vecteur ligne (cos $\psi$ − sin $\psi$), soit:

$$\delta\phi N = (\cos \Psi - \sin \Psi) \begin{pmatrix} \delta\phi L \\ \delta\phi T \end{pmatrix}$$

Les termes sin $\psi$ et cos $\psi$ de la matrice ligne peuvent être avantageusement remplacés par les termes B21 et B11 de la matrice B qui en sont des approximations suffisamment précises dans la plupart des cas. La composante Nord de l'erreur d'attitude est alors simplement donnée par: $\delta\phi N = B11\delta\phi L - B21\delta\phi T$.

A partir de cette composante Nord de l'erreur d'attitude, la valeur corrective C à apporter à l'erreur de cap estimée par le bloc 13 de fonction Arctg est calculée au moyen d'une relation du type:

$$C = (Hv/HN)\ \delta\phi N$$

Cette valeur corrective C est ensuite ajoutée à l'erreur de cap au moyen d'un sommateur 15 qui délivre à sa sortie l'erreur de cap.

Comme précédemment mentionné, l'erreur d'assiette et l'erreur de cap déterminées selon le trièdre long-travers sont utilisées pour élaborer les corrections à appliquer aux mesures de l'ensemble gyrométrique 1.

Cette élaboration des corrections s'effectue au moyen des circuits schématisés dans le bloc 16 qui comprennent successivement:
— un filtre du premier order 17, avec gain de retour K1, qui sert à filtrer les bruits d'accélération dont sont affectés les signaux représentatifs des erreurs d'assiette et de cap,
— un circuit 18 permettant de projeter les composantes des erreurs d'assiette et de cap sur les trois axes du trièdre lié à l'aérodyne; cette opération nécessite en principe la connaissance de sin $\phi$ et cos $\phi$, mais ces expressions peuvent être remplacées par les termes B32 et B33 de la matrice B car $\theta$ reste voisin de 0 sur un aérodyne,
— un régulateur proportionnel et intégral 19 caractérisé par les gains K2 et K3 permettant d'obtenir des performances d'attitude correctes malgré l'utilisation de gyromètres de précision médiocre et présentant des dérives journalières importantes,
— un dispositif de calcul 20 utilisant la valeur moyenne de la rotation terrestre représentée sous la forme de données fixées en mémoire, cette valeur étant projetée sur les axes du trièdre lié à l'aérodyne à l'aide de la matrice B, et
— un additionneur 21 pour ajouter aux composantes de cette valeur moyenne les valeurs délivrées par le régulateur 18, cet additionneur 21 fournissant, en conséquence, les valeurs (sur les trois axes du trièdre lié à l'aérodyne) des corrections à effectuer sur les mesures des gyromètres de l'ensemble gyromètrique.

Sur la figure 2, le circuit réalisant la correction des mesures des gyromètres a été schématisé par un soustracteur 22 monté dans le circuit reliant les gyromètres de l'ensemble gyromètrique 1 au bloc de calcul 4 de la matrice B.

Dans l'exemple précédemment décrit, la centrale d'attitude utilise la vitesse air de l'aérodyne. Toutefois, il s'avère que ce paramètre n'est pas toujours disponible à bord de l'aérodyne ou que, pour une raison quelconque, par exemple lorsque la vitesse air est très faible, la mesure effectuée par la centrale anémomètrique est insuffisamment précise.

C'est la raison pour laquelle l'invention prévoit un mode de fonctionnement n'utilisant pas la vitesse air (mode sans TAS) et faisant intervenir un circuit logique 23 pilotant deux circuits d'écrêtage 24, 25 respectivement situés à la sortie du bloc 11 et du sommateur 15.

Ainsi, dans le cas du mode sans TAS, le circuit 24 effectue l'écrêtage, à une première valeur prédéterminée par exemple à 1°, des signaux d'erreur d'assiette délivrés par le bloc 11 et le circuit 25 effectue l'écrêtage à une deuxième valeur prédéterminée, par exemple de 2°, du signal d'erreur de cap délivré par le sommateur 15.

En outre, le circuit 23 est conçu de manière à effectuer la coupure des boucles dans le cas où l'angle de gîte est supérieur en valeur absolue à un angle prédéterminé, par exemple de 6° et si la vitesse de rotation en azimut est supérieure en valeur absolue à une valeur de 0,6°/s (détection d'un virage).

Bien entendu, la centrale d'attitude précédemment décrite doit être périodiquement alignée, en principe au sol (alignement initial) ou bien en vol, par exemple à la suite d'un arrêt accidentel de la centrale.

Un avantage important de la centrale selon l'invention consiste en ce qu'elle ne fait pas intervenir de circuit particulier pour effectuer un tel alignement, et ce, en raison de la structure bouclée des circuits précédemment décrits.

Ainsi, dans le cas d'un alignement au sol, cet alignement sera obtenu en faisant fonctionner la centrale dans le mode sans TAS au cours d'une période, par exemple inférieure à 1 m (60 s), pendant laquelle l'aérodyne est immobile.

Il est clair que, pendant cette période, les angles d'attitude fournis par la centrale qui seront au départ erronés vont rapidement converger vers les valeurs réelles, puis s'y maintenir.

De même, l'alignement de la centrale en vol s'obtient au cours d'une période pendant laquelle l'aérodyne est maintenu en vol stabilisé, en palier. Toutefois, dans ce cas, la centrale sera maintenue dans le mode avec TAS.

La logique de changement de mode de fonctionnement est traitée dans le circuit logique 23; celui-ci détecte les conditions de passage dans le mode "alignement" et les conditions de transition dans le mode de fonctionnement normal. Il sélectionne en outre, parmi des valeurs stockées en mémoire, les valeurs des gains K1, K2 et K3 appropriées au mode de fonctionnement courant, plus élevées en alignement qu'en fonctionnement normal pour assurer une convergence rapide des angles d'attitude. D'autre part, dans le cas de l'alignement au sol sans TAS, les écrêtages 24 et 25 pilotés par le bloc 23 sont inhibés.

## Revendications

1. Centrale d'attitude pour aérodyne caractérisée en ce qu'elle comprend:
— un ensemble de détection accélérométrique (2) apte à fournir les composantes accélérométriques de l'aérodyne selon un trièdre lié à l'aérodyne,
— un ensemble de détection gyrométrique (1) apte à déterminer l'orientation de l'aérodyne par rapport à un trièdre équipollent au susdit trièdre,
— un ensemble de détection magnétométrique (3) apte à détecter les composantes du champ magnétique terrestre dans un trièdre équipollent aux susdits trièdres;
— des moyens de calcul (4) aptes à él'aborer, à partir des informations délivrées par le susdit ensemble gyrométrique (1) et convenablement corrigées, une matrice (B) permettant d'effectuer la projection des composantes déterminées par les susdits ensembles, par rapport au trièdre liè a l'aérodyne, dans le trièdre géographique local,
— des moyens permettant de déterminer, à partir des informations fournies par l'ensemble de détection gyrométrique (1) et par l'ensemble accélérométrique (2), les composantes horizontales de l'erreur d'attitude dans le trièdre long-travers,
— des moyens permettant de projeter les composantes du champ magnétique terrestre déterminées par le susdit ensemble magnétométrique (3) dans le trièdre géographique local, à l'aide de la susdite matrice (B),
— des moyens permettant d'extraire à partir des composantes de ces projections, des termes appropriés de la matrice (B) et des composantes horizontales de l'erreur d'attitude dans le trièdre long-travers, l'erreur de cap dans le trièdre long-travers,
— des moyens (16) pour élaborer les corrections des mesures gyrométriques (1) dans le susdit trièdre lié à l'aérodyne, notamment à partir des erreurs d'assiette et de cap précédemment déterminées, ainsi que des valeurs correctives tenant compte de la rotation terrestre,
— des moyens d'extraction (4') de l'angle de gîte, de l'assiette longitudinale et du cap, à partir de la susdite matrice (B).

2. Centrale d'attitude selon la revendication 1, caractérisée en ce que les susdits moyens de détermination des composantes horizontales de l'erreur d'attitude comprennent:
— des moyens (5) de détermination de la vitesse air (TAS) de l'aérodyne,
— des moyens (6) permettant de calculer à partir de la susdite vitesse air, les composantes de l'accélération dans le susdit premier trièdre,
— des moyens (7) permettant de déterminer les composantes de l'accélération de la pesanteur dans le susdit premier trièdre en retranchant aux composantes de l'accélération déterminées par le susdit ensemble accélérométrique (2), les composantes calculées à partir de la vitesse air,
— des moyens permettant de projeter lesdites composantes de l'accélération de la pesanteur dans le trièdre géographique local, de manière à faire apparaître, dans le plan horizontal des erreurs d'accélération attribuables à des erreurs d'attitude,
— des moyens permettant de projeter ces composantes dans le trièdre long-travers, et
— des moyens permettant de déterminer les composantes horizontales des erreurs d'attitude dans le trièdre long-travers à partir des composantes de l'accélération précédemment obtenues.

3. Centrale d'attitude selon la revendication 1, caractérisée en ce qu'elle comprend des moyens d'écrêtage (24, 25) des composantes horizontales des erreurs d'attitude et des erreurs de cap transmises aux susdits moyens (16) permettant d'élaborer les corrections des mesures gyrométriques (1), et un circuit logique propre à inhiber ou à activer lesdits moyens d'écrêtage (24, 25) selon que l'on utilise ou non la vitesse air de l'aérodyne.

4. Centrale d'attitude selon l'une des revendications précédentes, caractérisée en ce que la détermination des erreurs de cap dans le trièdre long-travers est réalisée au moyen:
— d'un dispositif (12) permettant de projeter les composantes du champ magnétique terrestre déterminées par le susdit ensemble magnétométrique (3) dans le trièdre géographique local,
— d'un dispositif (13) permettant d'évaluer l'erreur de cap à partir des composantes Nord et Est dudit champ magnétique,
— d'un dispositif (14) permettant de déterminer une valeur corrective de l'erreur de cap, à partir des composantes horizontales de l'erreur d'attitude, des termes (B11) edt (B21) de la matrice (B) ou de l'azimut et des composantes Nord et verticale du champ magnétique terrestre,
— d'un dispositif (15) permettant de corriger l'erreur de cap estimée, à l'aide de cette valeur corrective.

5. Centrale d'attitude selon l'une des revendications précédentes, caractérisée en ce que les susdits moyens (16) permettant d'élaborer des corrections des mesures fournies par l'ensemble gyrométrique (1) à partir des composantes horizontales de l'erreur d'attitude et de l'erreur de cap comprennent successivement:
— un filtre du premier ordre (17) permettant de filtrer les bruits d'accélération dont sont affectés les signaux représentatifs des erreurs d'assiette et de cap,
— un circuit (18) permettant de projeter les composantes des erreurs d'assiette et de cap filtrées sur les trois axes du trièdre lié à l'aérodyne,
— un régulateur proportionnel et intégral (19),
— un dispositif de calcul de la valeur moyenne de la rotation terrestre (20), projetée sur les axes du trièdre lié à l'aérodyne, et
— un additionneur (21) permettant d'ajouter à cette valeur moyenne les valeurs délivrées par ledit régulateur (19), cet additionneur (21) délivrant les valeurs des corrections à effectuer sur les mesures des gyromètres de l'ensemble gyrométrique (1).

## Patentansprüche

1. Lagebestimmungssystem für ein Luftfahrzeug, dadurch gekennzeichnet, dass es aufweist:
— eine Beschleunigungserfassungseinheit (2), welche die Beschleunigungskomponenten des Luftfahrzeugs im Verhältnis zu einem dem Luftfahrzeug zugeordneten Achsenkreuz liefert,
— eine gyrometrische Erfassungseinheit (1) zur Bestimmung der Lage des Luftfahrzeugs im Verhältnis zu einem mit dem obengenannten Achsenkreuz gleichwertigen Achsenkreuz,
— eine magnetometrische Erfassungseinheit (3), zur Erfassung der Komponenten des Erdmagnetfeldes in einem mit obengenanntem Achsenkreuz gleichwertigen Achsenkreuz,
— Rechenmittel (4), welche aus den von der besagten gyrometrischen Einheit (1) gelieferten und zweckmässig korregierten Information eine Matrix (B) erarbeiten können, die es erlaubt, die von besagten Einheiten im Verhältnis zu dem vom Luftfahrzeug abhängigen Achsenkreuz bestimmten Komponenten in das lokale geographische Achsenkreuz zu projezieren,
— Mittel, um aus den von der gyrometrischen Erfassungseinheit (1) und der Beschleunigungserfassungseinheit (2) gelieferten Informationen die waagerechten Komponenten des Lagefehlers im Längs/Querachsenkreuz zu bestimmen,
— Mittel, um die von der magnetometrischen Einheit (3) bestimmten Komponenten des Erdmagnetfeldes mittels der Matrix (B) in das lokale geographische Achsenkreuz zu projezieren,
— Mittel, um aus den Komponenten dieser Projektionen, den geeigneten Wertender Matrix (B) und aus den waagerechten Komponenten des Lagefehlers im Längs/Querachsenkreuz den Kursfehler aus dem Längs/Querachsenkreuz zu entnehmen,
— Mittel (16), um Korrekturen der gyrometrischen Messungen (1) in besagtem, vom Luftfahrzeug abhängigem Achsenkreuz zu erarbeiten, insbesondere aus den vorher bestimmten Trimm- und Kursfehlern, sowie aus Korrekturwerten, welche die Erdumdrehung in Betracht ziehen,
— Mittel (4'), um aus besagter Matrix (B) den Überliegewinkel, die Längstrimmung und den Kurs zu entnehmen.

2. Lagebestimmungssystem nach Anspruch 1, dadurch gekennzeichnet, dass besagte Mittel zur Bestimmung der waagerechten Komponenten des Lagefehlers aufweisen:
— Mittel (5) zur Bestimmung der Luftgeschwindigkeit (TAS) des Luftfahrzeugs,
— Mittel (6) um aus besagter Luftgeschwindigkeit die Beschleunigungskomponenten im besagten ersten Achsenkreuz zu berechnen,
— Mittel (7), um die Beschleunigungskomponenten der Schwerkraft in besagtem erstem Achsenkreuz zu bestimmen, indem man von den von besagter Beschleunigungsmesseinheit bestimmten Beschleunigungskomponenten die aus der Luftgeschwindigkeit berechneten Komponenten abzieht,
— Mittel, um besagte Komponenten der Schwerkraftbeschleunigung in das lokale geographische Achsenkreuz zu projezieren, um in der waagerechten Ebene Beschleunigungsfehler, die auf Lagefehler zurückzuführen sind, erscheinen zu lassen,
— Mittel, um besagte Komponenten in das Längs/Querachsenkreuz zu projezieren, und
— Mittel, um die waagerechten Komponenten der Lagefehler im Längs/Querachsenkreuz aus den vorher ermittelten Beschleunigungskomponenten zu bestimmen.

3. Lagebestimmungssystem nach Anspruch 1, dadurch gekennzeichnet, dass es Mittel (24, 25) zur Begrenzung der waagerechten Komponenten der Lagefehler und der Kursfehler enthält, die an besagte Mittel (16) weitergegeben werden, zur Ausarbeitung von Korrekturen der gyrometrischen Messungen (1), und einen logischen Schaltkreis, der besagte Begrenzungsmittel (24, 25) sperrt oder aktiviert, je nachdem man die Luftgeschwindigkeit des Luftfahrzeugs benutzt oder nicht.

4. Lagebestimmungssystem nach einem der vorhergehenden Ansprüche, dadurch gekennzeichnet, dass die Bestimmung der Kursfehler im Längs/Querachsenkreuz erfolgt mittels:
— einer Vorrichtung (12), die es ermöglicht, die von der besagten magnetometrischen Einheit (3) bestimmten Komponenten des Erdmagnetfeldes in das lokale geographische Achsenkreuz zu projezieren,
— einer Vorrichtung (13), die es ermöglicht, den Kursfehler aus den Nord- und Ostkomponenten des besagten Magnetfeldes zu schätzen,
— einer Vorrichtung (14), die es ermöglicht, einen Korrekturwert des Kursfehlers zu bestimmen, aus den waagerechten Komponenten des Lagefehlers, den Werten (B11) und (B12) der Matrix (B) oder aus dem Azimut und den Nord- und senkrechten Komponenten des Ermagnetfeldes,
— einer Vorrichtung (15), welche es ermöglicht, den geschätzten Kursfehler mittels dieses Korrekturwertes zu korrigieren.

5. Lagebestimmungssystem nach einem der vorhergehenden Ansprüche, dadurch gekennzeichnet, dass besagte Mittel (16), die es ermöglichen, Korrekturen der von der gyrometrischen Einheit (1) gelieferten Messwerte auszuarbeiten, ausgehend von den waagerechten Komponenten des Lagefehlers und des Kursfehlers, nacheinander angeordnet aufweisen:
— einen Filter erster ordnung (17), der es ermöglicht, die Beschleunigungsgeräusche zu filtern, mit denen die Signale für Trimm- und Kursfehler behaftet sind,
— einen Schaltkreis (18), der es ermöglicht, die gefilterten Komponenten der Trimm- und Kursfehler der drei Achsen auf die drei Achsen des vom Luftfahrzeug abhängigen Achsenkreuz zu projezieren,
— einen Proportional- und Integralregulator (19),
— eine Vorrichtung zur Berechnung des Durchschnittswertes der Erdumdrehung (20), welcher auf die Achsen des vom Luftfahrzeug abhängigen Achsenkreuzes projeziert wird,
— einen Addierer (21), der es ermöglicht, diesem Durchschnittswert die von besagtem Regulator (19) gelieferten Werte hinzuzufügen, wobei besagter Addierer (21) die Korrekturwerte für die Messwerte der Gyrometer der gyrometrischen Einheit (1) liefert.

## Claims

1. Attitude determining system for aircraft, characterized in that it comprises:
— an accelerometric detection assembly (2) adapted to deliver the accelerometric components of the aircraft in accordance with an axis system related to the aircraft,
— a gyrometric detection assembly (1) adapted for determining the orientation of the aircraft with respect to an axis system equipollent to said axis system,
— a magnetometric detection assembly (3) adapted for detecting the components of the Earth's magnetic field in an axis system equipollent to said axis systems;
— computing means (4) adapted for elaborating, from information delivered by said gyrometric assembly (1) and suitably corrected, a matrix (B) for projecting the components determined by said assemblies, with respect to the axis system related to the aircraft, in the local geographic axis system,
— means for determining, from information delivered by the gyrometric detection assembly (1) and by the accelerometric assembly (2), the horizontal components of the attitude error in the long-across axis system,
— means for projecting the components of the Earth's magnetic field defined by said magnetometric assembly (3) in the local geographic axis system, by means of said matrix (B),
— means for extracting, from the components of these projections, appropriate terms of the matrix (B) and, from the horizontal components of the attitude error in the long-across axis system, the heading error in the long-across axis system,
— means (16) for elaborating the corrections of the gyrometric measurements (1) in said axis system related to the aircraft, particularly from previously determined attitude and heading errors, as well as from corrective values taking into account the Earth's rotation,
— means (4') for extracting the angle of heel, the longitudinal attitude and the heading from said matrix (B).

2. Attitude determining system according to claim 1, characterized in that said means for determining the horizontal components of the attitude error comprise:
— means (5) for determining the air speed (TAS) of the aircraft;
— means (6) for computing, from said air speed, the components of the acceleration in said first axis system,
— means (7) for determining the components of the acceleration of gravity in said first axis system by subtracting, from the components of the acceleration determined by said accelerometric assembly (2), the components calculated from the air speed,
— means for projecting said components of the acceleration of gravity in the local geographic axis system so as to cause horizontal errors of acceleration to appear in the horizontal plane which can be attributed to attitude errors,
— means for projecting these components in the long-across axis system, and
— means for determining the horizontal components of the attitude errors in the long-across axis system from the previously obtained components of the acceleration.

3. Attitude determining system according to claim 1, characterized in that it comprises means (24, 25) for peak clipping the horizontal components of the attitude errors and the heading errors transmitted to said means (16) for elaborating the corrections of the gyrometric measurements (1), and a logic circuit adapted to inhibit or activate said peak clipping means (24, 25) depending on whether the air speed of the aircraft is used or not.

4. Attitude determining system according to one of the preceding claims, characterized in that determination of the heading errors in the long-across axis system is achieved by means:

— of a device (12) for projecting the components of the Earth's magnetic field defined by said magnetometric assembly (3) in the local geographic axis system,

— of a device (13) for evaluating the heading error from the North and East components of said magnetic field,

— of a device (14) for determining a corrective value of the heading error, from the horizontal components of the attitude error, terms (B11) and (B21) of the matrix (B) or form the azimuth and North and vertical components of the Earth's magnetic field,

— of a device (15) for correcting the estimated heading error by means of this corrective value.

5. Attitude determining system according to one of the preceding claims, characterized in that said means (16) for elaborating corrections of the measurements delivered by the gyrometric assembly (1) from the horizontal components of the attitude error and from the heading error comprise successively:

— a first order filter (17) for filtering out the acceleration noises with which the signals representative of the attitude and heading errors are affected,

— a circuit (18) for projecting the filtered attitude and heading components on the three axes on the three axes of the axis system related to the aircraft,

— a proportional and integral regulator (19),

— a device for calculating the mean value of the Earth's rotation (20), projected on the axes of the axis system related to the aircraft, and

— an adder (21) for adding to this mean value the values delivered by said regulator (19), this adder (21) delivering the values of the corrections to be made to the measurements by the gyrometers of the gyrometric assembly (1).

PROJECTION DE L'AXE x SUR LE PLAN $x_0 y_0$

PLAN HORIZONTAL $x_0 y_0$

$x$

$\psi'$

$x_0$

$y_0$

$\psi'$

$\psi$

O

$y$

PLAN DE SYMETRIE $xz$

ORIGINE DU TRIEDRE AVION

$\psi'$

PLAN $yz$

$z$

$\psi$

$z_0$

VERTICALE

**FIG.1**

1

FIG.2